(19) Europäisches Patentamt
European Patent Office
Office européen des brevets

(11) **EP 4 681 852 A1**

(12) **EUROPEAN PATENT APPLICATION**
published in accordance with Art. 153(4) EPC

(43) Date of publication:
**21.01.2026 Bulletin 2026/04**

(21) Application number: **24796471.1**

(22) Date of filing: **18.01.2024**

(51) International Patent Classification (IPC):
**B23K 9/09** (2006.01)   **B23K 9/02** (2006.01)
**B23K 9/073** (2006.01)

(52) Cooperative Patent Classification (CPC):
**B23K 9/02; B23K 9/073; B23K 9/09**

(86) International application number:
**PCT/JP2024/001190**

(87) International publication number:
**WO 2024/224712 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.04.2023 JP 2023071307**

(71) Applicant: **JFE Steel Corporation
Tokyo 100-0011 (JP)**

(72) Inventors:
• **KONISHI, Kyohei
Tokyo 100-0011 (JP)**
• **SAWANISHI, Chikaumi
Tokyo 100-0011 (JP)**
• **TANIGUCHI, Koichi
Tokyo 100-0011 (JP)**

(74) Representative: **Haseltine Lake Kempner LLP
Bürkleinstrasse 10
80538 München (DE)**

(54) **ARC WELDED JOINT AND METHOD FOR MANUFACTURING SAME**

(57)    An object of the present invention is to provide an arc welded joint that has less slag adhesion amount, stable penetration depth, high welded joint strength, and high corrosion resistance at a weld, and to also provide a method for manufacturing the same.

An arc welded joint manufactured by lap fillet arc welding at a corner formed by two steel sheets, includes an upper sheet, a lower sheet, and a weld joining the upper sheet and the lower sheet. In the arc welded joint, the upper sheet and the lower sheet have a predetermined thickness; a lower sheet thickness $t_2$ and a penetration depth d, which is a distance from a boundary between the upper sheet and the lower sheet to a lower surface of a weld bead in a cross-section of the weld, satisfy a predetermined inequality; and a slag coverage area ratio $S_{RATIO}$ calculated by a predetermined equation using a bead surface area $S_{BEAD}$ of a weld bead surface and a slag surface area $S_{SLAG}$, which is an area of a region of the bead surface area $S_{BEAD}$ covered with slag, is less than or equal to 15%.

FIG. 6

**EP 4 681 852 A1**

## Description

Technical Field

The present invention relates to an arc welded joint that has less amount of slag and spatter adhesion and high corrosion resistance, and a method for manufacturing the same.

Background Art

In recent years, there has been a growing need for automobiles to have stronger and more rigid members for their bodies to improve safety and reliability of the bodies, as well as lighter members to improve fuel efficiency. Therefore, by using high-strength steel sheets, the thickness of steel sheets used in the members has been reduced. Of various members used in automobiles, suspension members (such as, for example, lower arms), in particular, use thicker steel sheets than those used in the bodies, from the perspective of member strength and rigidity. Therefore, when steel sheets used in the suspension members are made stronger and the thickness of the steel sheets is reduced, it will be possible to further reduce the weight of the automotive body. This improves fuel efficiency while ensuring member strength and rigidity.

Generally, members used in corrosive environments undergo anti-rust treatments, such as chemical conversion treatment and electrodeposition coating, after welding to ensure corrosion resistance. Over time, however, rust and corrosion may be observed at and near welds. In members that have undergone electrodeposition coating as described above, corrosion tends to start at welds. As time passes, while being accompanied by blistering of the coating, the corrosion spreads over a wider area at and around the welds and progresses in the thickness direction. As the corrosion progresses as described above, the sheet thickness at and near the welds decreases, and this results in a reduction in weld strength and consequently a reduction in the strength of the member. In other words, when corrosion occurs and progresses in a member (such as the suspension members of the automobile) that bears loads at welds, it may lead to member failure.

For electrodeposition coating, a chemical conversion treatment (such as zinc phosphate treatment) is first applied to the base steel sheet and the weld metal as a pretreatment, before electrodeposition coating, to enhance adhesion between the electrodeposited coating and both the base steel sheet and the weld metal. Zinc phosphate treatment, which is widely used as an example of chemical conversion treatment, is a technique that grows zinc phosphate crystals on the surfaces of the base steel sheet and weld metal to enhance adhesion of the electrodeposited coating. With conventional techniques, however, even in members that have undergone chemical conversion treatment before electrodeposition coating, there is a frequent occurrence of blistering of the coating in a wide area at and around welds over time. In other words, with techniques that perform electrodeposition coating after performing the above-described chemical conversion treatment as a pretreatment, it is difficult to completely suppress the occurrence of corrosion starting from welds.

When arc welding is performed on members using steel sheets with a coated layer, the coated layer evaporates at welds exposed to high heat from arc plasma (hereinafter referred to as arc) serving as a heat source, and uncoated areas are locally exposed. Therefore, a significant improvement in corrosion resistance that would justify the use of costly steel sheets with a coated layer cannot be expected.

As described above, although various manufacturing techniques have been developed to improve the corrosion resistance of members, they all have both advantages and disadvantages. From the perspective of improving corrosion resistance while controlling the increase in manufacturing costs, techniques are being investigated to more effectively prevent the occurrence and progression of corrosion starting at welds.

As starting points for corrosion from welds,

(a) slag adhering to the weld (mainly the surface of the weld bead);
(b) weld fumes adhering to the weld; and
(c) oxides formed on the surface of the steel sheet exposed to high temperatures during welding, have been conventionally known. Even when a member with the adhering substances in (a) and (b) or the oxides in (c) present on the weld undergoes chemical conversion treatment, these adhering substances and products serve as starting points for localized regions that remain uncoated with a chemical conversion coating composed of zinc phosphate crystals. Even when electrodeposition coating is applied to such regions, the formation of the coating is insufficient and this results in poor coating adhesion. As a consequence, corrosion resistance is significantly reduced, which leads to a reduced sheet thickness caused by the occurrence and progression of corrosion. The following are being investigated as techniques that prevent the formation of the adhering substances described in (a) and (b) and the oxides described in (c).

For example, Patent Literature 1 discloses a technique in which after arc welding and before electrodeposition coating, a weld and its vicinity are sprayed with or immersed in a non-oxidizing acidic solution having a pH of less than or equal to 2 and a temperature of 30°C to 90°C. This technique removes the slag in (a), the weld fumes in (b), and the oxides in (c) by dissolving the weld bead and the steel sheet with the non-oxidizing solution.

However, the technique disclosed in Patent Literature 1 requires the acidic solution to be rinsed off before electrodeposition coating, which complicates the process of manufacturing the member. Since a member formed into a desired shape is made by overlapping and joining steel sheets of various shapes, any residual acidic solution in gaps between the overlapping steel sheets may cause severe corrosion. Since the acidic solution is used in large quantities, the manufacturing equipment is exposed to a corrosive environment and this increases the possibilities of corrosion and malfunctions. Additionally, it is necessary to prevent the dispersion of fumes to ensure the safety of workers.

Patent Literature 2 discloses a technique in which the corrosion resistance of a weld and its vicinity after coating is improved by reducing the total Si content in the welding wire and the base material used in arc welding, and increasing the total Mn content in the welding wire and the base material.

However, when the Si content is reduced from the perspective of suppressing slag formation, the strength of the steel sheet inevitably decreases. In other words, the technique disclosed in Patent Literature 2 requires the use of thicker steel sheets to ensure the strength of members, and it is difficult to achieve weight reduction of the automotive body.

Patent Literature 3 discloses a technique in which a chemical conversion coating is effectively formed by adjusting the composition of the treatment solution used in the chemical conversion treatment, even on weld beads where slag, weld fumes, and oxides are present. Specifically, the formation of a chemical conversion coating is facilitated by performing surface treatment using a surface conditioning solution containing zinc phosphate colloid. Additionally, by performing chemical conversion treatment using a zinc phosphate treatment solution containing greater than or equal to 100 mass ppm of F, slag, weld fumes, and oxides are dissolved and removed to improve the adhesion of the coating formed by electrodeposition coating.

However, the technique disclosed in Patent Literature 3 uses a zinc phosphate treatment solution containing fluorine designated as a toxic substance. When the waste solution is discharged to the outside of the factory, the fluorine content is to be reduced to a level that meets environmental standards. Therefore, in addition to the equipment for manufacturing the members, large-scale waste treatment facilities are required.

Citation List

Patent Literature

PTL 1: Japanese Unexamined Patent Application Publication No. 9-20994
PTL 2: Japanese Unexamined Patent Application Publication No. 8-33997
PTL 3: Japanese Patent No. 5549615

Summary of Invention

Technical Problem

The present invention has been made in view of the problems described above. An object of the present invention is to provide an arc welded joint that has less amount of slag and spatter adhesion and high corrosion resistance, and a method for manufacturing the same. Solution to Problem

The present inventors considered that to improve corrosion resistance at a weld, it is important to stably obtain a welded joint having less amount of slag adhering to the weld and less amount of spatter adhesion.

To suppress the amount of slag formation at the weld, it is important to suppress oxidation of Si, Mn, Ti, and the like contained in the steel sheet and the welding wire. By using a shielding gas with less oxidizing gas content, the oxidation of these elements is suppressed and the amount of slag formation can be reduced. However, in gas-shielded arc welding with a high Ar gas ratio in the shielding gas, after the cleaning action removes the oxide film on the steel sheet surface, the wandering of cathode spots over the steel sheet surface causes arc instability. Therefore, it is effective to use pulsed welding to reduce the wandering of cathode spots and achieve periodic short-circuiting transfer that is less susceptible to arc fluctuations. A problem with normal short-circuiting transfer is that many spatters are generated and adhere to the weld bead surface. The present inventors have found the following technique that uses pulsed welding to reduce the wandering of cathode spots and achieve periodic short-circuiting transfer less susceptible to arc fluctuations, and controls a pulsed current waveform to obtain a welded joint with less amount of slag and spatter adhesion.

Specifically, the present inventors have found that in controlling the pulsed current waveform, by decreasing the pulse peak current from the pulse peak start to the pulse peak end, and by setting a pulse peak start current $I_{pstart}$ to greater

than or equal to 300 A and less than or equal to 600 A, and also setting a pulse peak end current $I_{pend}$ to greater than or equal to 200 A and less than or equal to 450 A, an arc welded joint with less amount of spatter adhesion in a weld spatter affected zone including the weld bead, a weld toe which is the boundary between the base material and the weld bead, and its surrounding area, can be obtained.

The present invention is based on the findings described above and is summarized as follows.

[1] An arc welded joint manufactured by arc welding includes a base material, a weld bead formed by fusing and solidifying the base material and a welding wire melted by heat input from arc, and a weld heat affected zone. In a weld spatter affected zone whose length in a direction of a weld line is a length of the weld bead excluding weld-bead start and end portions each 15 mm long and whose length in a direction perpendicular to the weld line is 40 mm centered on a center line of the weld bead, the number of spatters generated during welding, adhering to the weld spatter affected zone, and each having an adhesion region with a maximum length of greater than or equal to 0.2 mm is less than or equal to 0.50 spatters/cm$^2$, and a slag coverage area ratio $S_{RATIO}$ calculated by the following equation (1) using a bead surface area $S_{BEAD}$ of a weld bead surface and a slag surface area $S_{SLAG}$, which is an area of a region of the bead surface area $S_{BEAD}$ covered with slag, is less than or equal to 15%:

$$S_{RATIO} = S_{SLAG} / S_{BEAD} \times 100 \quad \cdots \quad (1)$$

where, in equation (1), $S_{BEAD}$ (mm$^2$) is bead surface area, $S_{SLAG}$ (mm$^2$) is slag surface area being the area of the region covered with slag, and $S_{RATIO}$ (%) is slag coverage area ratio.

[2] An arc welded joint manufacturing method for manufacturing an arc welded joint according to [1] includes performing arc welding that joins a welding wire and a base material by short-circuiting. In the arc welded joint manufacturing method, the arc welding is pulsed welding that periodically repeats a pulse peak current and a base current, an average welding current $I_{AVE}$ is greater than or equal to 100 A and less than or equal to 320 A, the pulse peak current decreases from pulse peak start to pulse peak end, a pulse peak start current $I_{pstart}$ is greater than or equal to 300 A and less than or equal to 600 A, a pulse peak end current $I_{pend}$ is greater than or equal to 200 A and less than or equal to 450 A, and a gas containing greater than or equal to 98 vol% Ar is used as a shielding gas during welding.

[3] In the arc welded joint manufacturing method according to [2], in the pulsed welding, a pulse peak time $T_p$ is greater than or equal to 1.0 ms and less than or equal to 3.5 ms, and the pulse peak start current $I_{pstart}$, the pulse peak end current $I_{pend}$, and the pulse peak time $T_p$ satisfy the following inequality (2):

$$45 \leq (I_{pstart} - I_{pend}) / T_p \leq 210 \quad \cdots \quad (2)$$

where, in inequality (2), $I_{pstart}$ (A) is pulse peak start current, $I_{pend}$ (A) is pulse peak end current, and $T_p$ (ms) is pulse peak time.

Advantageous Effects of Invention

The present invention can provide an arc welded joint that has less amount of spatter and slag adhesion and high corrosion resistance at a weld. Additionally, the advantageous effects described above can be achieved without making special changes to the specifications of welding equipment used in conventional carbon dioxide welding, MAG welding using mixtures of inert and active gases, or MIG welding using gasses mainly composed of inert gases.

Brief Description of Drawings

[Fig. 1] Fig. 1 is a schematic diagram illustrating an example of a welded joint made by arc welding.
[Fig. 2] Fig. 2(a) and Fig. 2(b) are schematic diagrams illustrating short-circuiting transfer in the present invention.
[Fig. 3] Fig. 3 is a schematic diagram illustrating a pulsed current waveform in arc welding according to the present invention.
[Fig. 4] Fig. 4 is a schematic diagram illustrating a range for evaluating spatters in an arc welded joint according to the present invention.
[Fig. 5] Fig. 5 is a schematic diagram illustrating a bead area and a slag coverage area in a weld bead. Description of Embodiments

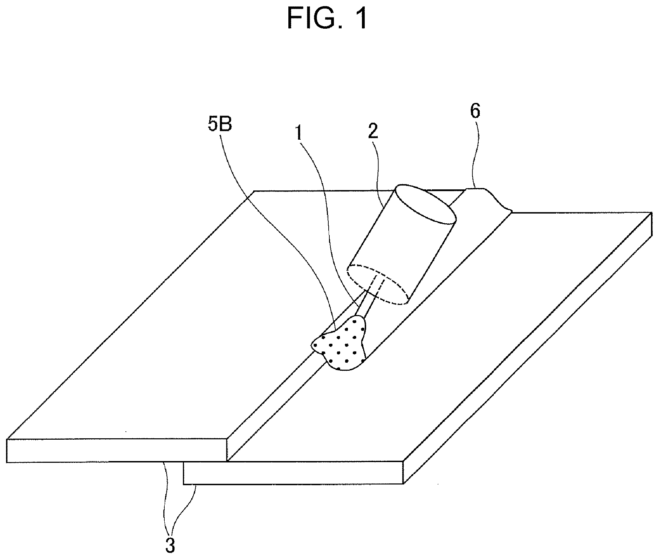

Hereinafter, details of the present invention will be described with reference to the drawings. Fig. 1 is a schematic diagram illustrating, as an exemplary embodiment of the present invention, an example of a welded joint made by arc welding. Although welding on a single base material is illustrated as a representative example here, the welded joint shape and the welding position are not limited in the present invention.

In the present invention, as illustrated in Fig. 1, for example, a welding voltage is applied from a welding power source (not illustrated), with a welding wire 1, which is continuously fed from a welding torch 2 through the center of the welding torch 2 to a base material 3, serving as the anode and the base material 3 serving as the cathode. A contact tip is installed in the welding torch 2. The contact tip supplies power to the welding wire 1 and serves as a feeding guide. An arc 5B is formed between the welding wire 1 and the base material 3, as part of Ar shielding gas (not illustrated) supplied through the welding torch 2 becomes ionized into plasma. Another part of the Ar shielding gas flowing from the welding torch 2 to the base material 3 without becoming ionized serves to shield the arc 5B and a molten pool (not illustrated in Fig. 1) formed by melting of the base material 3 from the outside air. Heat input from the arc 5B causes the tip of the welding wire 1 to melt and form a droplet, which is transported to the molten pool by electromagnetic force, gravity, and the like. This phenomenon continuously occurs as the welding torch 2 or the base material 3 moves, and the molten pool solidifies behind the weld line to form a weld bead 6.

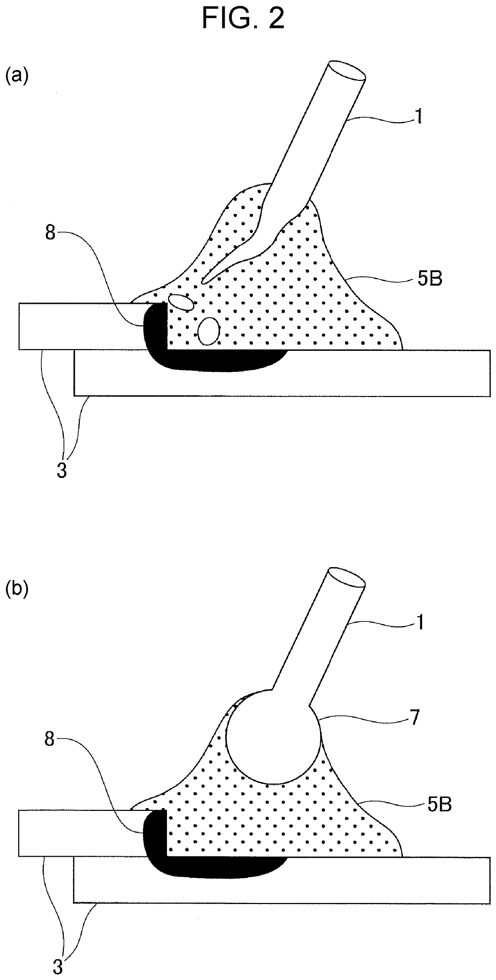

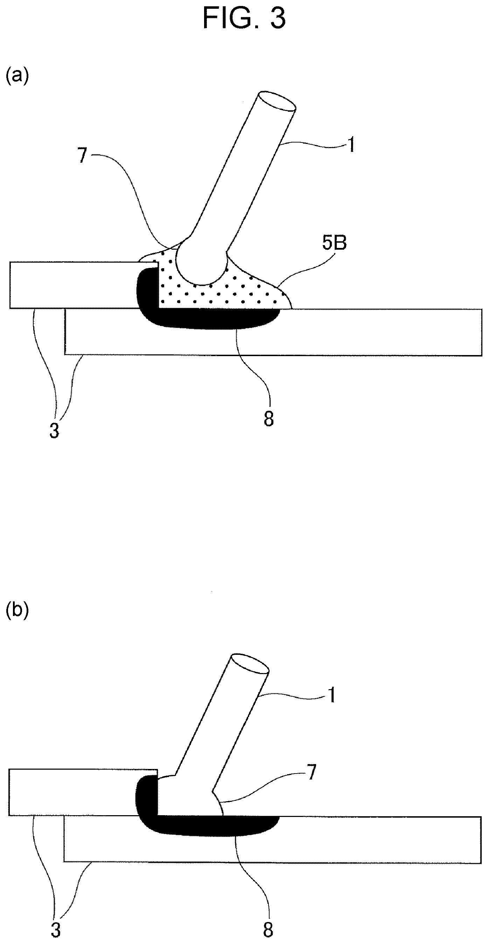

The present invention has found that an effective way of stabilizing droplet transfer is to perform pulsed welding that completes the joining by so-called periodic short-circuiting transfer in which a non-short-circuiting state illustrated in Fig. 2(a) and a short-circuiting state illustrated in Fig. 2(b) are regularly repeated between the tip of the welding wire 1 and the base material 3, and the droplet 7 is transferred to the base material 3 in the short-circuiting state. Fig. 3 is a schematic diagram illustrating an example of a pulsed current waveform in arc welding according to the present invention. $I_{pstart}$ denotes a current at the pulse peak start (pulse peak start current), $I_{pend}$ denotes a current at the pulse peak end (pulse peak end current), $I_B$ denotes a base current, and $T_p$ denotes a pulse peak time. As a result of further welding experiments, it was found that by decreasing the pulse peak current from the pulse peak start to the pulse peak end as illustrated in Fig. 3, an arc welded joint with less amount of spatter adhesion in a weld spatter affected zone including the weld bead 6 and a weld toe and its surrounding area was obtained. This is the effect of reducing the pushing-down action of the arc 5B on the droplet 7 immediately before the end of pulse peak current, that is, at the time of short-circuiting transfer, and reducing an arc pressure 10, so as to lessen the momentum of the entry of the droplet 7 into the molten pool 8 and enable spatter reduction. As a representative example, Fig. 3 illustrates a pulsed current waveform in which the pulse peak current decreases at a constant rate from the pulse peak start to the pulse peak end. However, the present invention does not limit the process of decreasing the pulse peak current from the pulse peak start to the pulse peak end. The effect described above can be achieved by setting the pulse peak start current $I_{pstart}$ to greater than or equal to 300 A and less than or equal to 600 A, and setting the pulse peak end current $I_{pend}$ to greater than or equal to 200 A and less than or equal to 450 A.

First, an arc welded joint will be described in detail.

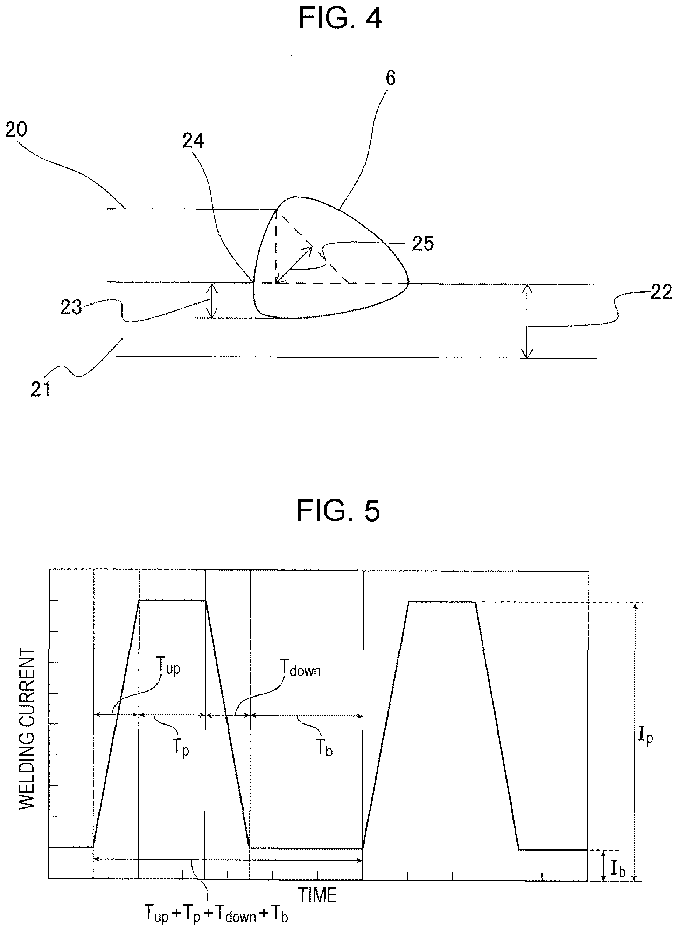

Fig. 4 is a schematic diagram illustrating a range for evaluating spatters in an arc welded joint according to the present invention. The arc welded joint includes the base material 3, the weld bead 6 formed by fusing and solidifying the base material 3 and the welding wire 1 melted by heat input from the arc 5B, and a weld heat affected zone. Since large-diameter spatters serve as starting points for corrosion, it is preferable to reduce such spatters. It is particularly important to control the number of spatters 22 adhering to the boundary (weld toe) between the base material 3 and the weld bead 6 and its surrounding area, where stress concentration occurs particularly when external force is applied. Therefore, by reducing the number of adhering spatters 22 generated and adhering during welding in a weld spatter affected zone 21 whose length in a weld line direction 23 is the length of the weld bead 6 excluding weld-bead start and end portions 20 each 15 mm long and whose length in a direction perpendicular to the weld line is 40 mm centered on the center line of the weld bead 6, the corrosion resistance of the weld can be improved. The weld spatter affected zone 21 always includes the boundary (weld toe) between the base material 3 and the weld bead 6.

The number of spatters adhering to the weld spatter affected zone and each having an adhesion region with a maximum length of greater than or equal to 0.2 mm: less than or equal to 0.50 spatters/$cm^2$

When the number of adhering spatters, each having an adhesion region with a maximum length of greater than or equal to 0.2 mm, exceeds 0.50 spatters/$cm^2$, rust will form starting from spatters and corrosion will progress toward the weld toe. This will reduce corrosion resistance of the weld, and may result in a decrease in the strength of the welded joint due to a reduction in sheet thickness. Therefore, the number of adhering spatters is to be less than or equal to 0.50 spatters/$cm^2$. The number of adhering spatters is preferably less than or equal to 0.48 spatters/$cm^2$. The number of adhering spatters is more preferably less than or equal to 0.45 spatters/$cm^2$, and even more preferably less than or equal to 0.42 spatters/$cm^2$. The lower limit is not particularly defined and may be 0 spatters/$cm^2$. Note that the maximum length of an adhesion region refers to the longest distance in a straight line between different ends of the adhesion region. Although no particular upper limit is defined for the maximum length of an adhesion region, it is preferable to consider only those having an adhesion region with a maximum length of less than or equal to 5.0 mm, as spatters exceeding 5.0 mm are unlikely to be generated.

No limit is defined for spatters having an adhesion region with a maximum length of less than 0.2 mm, as they have only a little impact on corrosion resistance.

Slag coverage area ratio $S_{RATIO}$ calculated by equation (1) using bead surface area $S_{BEAD}$ of weld bead surface and slag surface area $S_{SLAG}$, which is the area of region of the bead surface area $S_{BEAD}$ covered with slag: less than or equal to 15%

$$S_{RATIO} = S_{SLAG} / S_{BEAD} \times 100 \quad \cdots \quad (1)$$

In equation (1), $S_{BEAD}$ (mm$^2$) is bead surface area, $S_{SLAG}$ (mm$^2$) is slag surface area which is the area of a region covered with slag, and $S_{RATIO}$ (%) is slag coverage area ratio.

When the slag coverage area ratio $S_{RATIO}$ exceeds 15%, rust and corrosion will progress over a wide area of the weld, starting from slag, and the strength of the welded joint may decrease due to a reduction in sheet thickness. Therefore, the slag coverage area ratio $S_{RATIO}$ is to be less than or equal to 15%. The slag coverage area ratio $S_{RATIO}$ is preferably less than or equal to 14%. The slag coverage area ratio $S_{RATIO}$ is more preferably less than or equal to 12%. The slag coverage area ratio $S_{RATIO}$ is even more preferably less than or equal to 10%. The slag coverage area ratio $S_{RATIO}$ is most preferably less than or equal to 8%. The lower limit is not particularly defined and may be 0%.

The welded joint according to the present invention is applicable to those having at least a length of greater than 30 mm in the weld line direction 23 and a length of greater than or equal to 40 mm in the direction perpendicular to the weld line. Although no particular upper limit is defined for the above, it is preferable that the length of the welded joint in the weld line direction 23 be less than or equal to 500 mm. The welded joint preferably has a length of less than or equal to 500 mm in the direction perpendicular to the weld line.

A method for manufacturing an arc welded joint will now be described in detail.

Arc welding that joins the welding wire and the base material by short-circuiting

In arc welding, for example, disturbances and cathode spot wandering may cause instability in droplet transfer. This may increase the occurrence of spatter and the number of adhering spatters, as well as the amount of slag formation and adhesion. By periodically short-circuiting the welding wire 1 and the base material 3, stable droplet transfer can be achieved and this leads to reduced occurrence of spatter and slag. Therefore, it is necessary to perform arc welding that joins the welding wire 1 and the base material 3 by short-circuiting them.

Pulsed welding that periodically repeats pulse peak current and base current, with an average welding current $I_{AVE}$ of greater than or equal to 100 A and less than or equal to 320 A

By using a pulsed current with an average welding current $I_{AVE}$ of greater than or equal to 100 A and less than or equal to 320 A, it is possible to facilitate periodic and stable short-circuiting transfer control even in arc welding using a shielding gas with an Ar gas ratio of greater than or equal to 98 vol%. Therefore, arc welding according to the present invention needs to be pulsed welding that periodically repeats a pulse peak current and a base current, with an average welding current $I_{AVE}$ of greater than or equal to 100 A and less than or equal to 320 A. When the average welding current $I_{AVE}$ is less than 100 A, the droplet transfer is unstable and periodic short-circuiting transfer cannot be achieved. This may increase the occurrence of spatter and the number of adhering spatters. Therefore, the average welding current $I_{AVE}$ is to be greater than or equal to 100 A. The average welding current $I_{AVE}$ is preferably greater than or equal to 120 A. The average welding current $I_{AVE}$ is more preferably greater than or equal to 140 A. The average welding current $I_{AVE}$ is even more preferably greater than or equal to 150 A. The average welding current $I_{AVE}$ is most preferably greater than or equal to 170 A. When the average welding current $I_{AVE}$ exceeds 320 A, the periodic short-circuiting transfer cannot be maintained and this may increase the occurrence of spatter and the number of adhering spatters. Therefore, the average welding current $I_{AVE}$ is to be less than or equal to 320 A. The average welding current $I_{AVE}$ is preferably less than or equal to 310 A. The average welding current $I_{AVE}$ is more preferably less than or equal to 300 A. The average welding current $I_{AVE}$ is even more preferably less than or equal to 280 A. The average welding current $I_{AVE}$ is most preferably less than or equal to 260 A.

Decreasing the pulse peak current from pulse peak start to pulse peak end

The spatters 22 are primarily generated at the time of short-circuiting that occurs immediately before the pulse peak end. When short-circuiting occurs under conditions of high current and high arc pressure 10, the droplet 7 is driven into the molten pool 8 and this makes the spatters 22 more likely to scatter. In contrast, by decreasing the pulse peak current from the pulse peak start to the pulse peak end so as to reduce the current and the arc pressure 10 during short-circuiting, the occurrence of spatter 22 and the number of adhering spatters 22 can be reduced. Therefore, it is necessary to decrease the pulse peak current from the pulse peak start to the pulse peak end.

Pulse peak start current $I_{pstart}$: greater than or equal to 300 A and less than or equal to 600 A

When the pulse peak start current $I_{pstart}$ is less than 300 A, the driving force for pushing the droplet 7 down to the molten pool 8 to achieve short-circuiting transfer will be too small, and periodic short-circuiting transfer will not be achieved. This may increase the occurrence of spatter and the number of adhering spatters. Therefore, the pulse peak start current $I_{pstart}$ is to be greater than or equal to 300 A. The pulse peak start current $I_{pstart}$ at the pulse peak start is preferably greater than or equal to 320 A, more preferably greater than or equal to 340 A, even more preferably greater than or equal to 350 A, and most preferably greater than or equal to 370 A. When the pulse peak start current $I_{pstart}$ exceeds 600 A, the driving force for pushing the droplet 7 down to the molten pool 8 to achieve short-circuiting transfer will be too large, and this will increase the occurrence of spatter and the number of adhering spatters during short-circuiting. Therefore, the pulse peak start current $I_{pstart}$ is to be less than or equal to 600 A. The pulse peak start current $I_{pstart}$ is preferably less than or equal to 590 A. The pulse peak start current $I_{pstart}$ is more preferably less than or equal to 580 A. The pulse peak start current $I_{pstart}$ is even more preferably less than or equal to 570 A. The pulse peak start current $I_{pstart}$ is most preferably less than or equal to 560 A.

Pulse peak end current $I_{pend}$: greater than or equal to 200 A and less than or equal to 450 A

When the pulse peak end current $I_{pend}$ is less than 200 A, droplet transfer is unstable and periodic short-circuiting transfer cannot be achieved. This may increase the occurrence of spatter and the number of adhering spatters. Therefore, the pulse peak end current $I_{pend}$ is to be greater than or equal to 200 A. The pulse peak end current $I_{pend}$ is preferably greater than or equal to 230 A. The pulse peak end current $I_{pend}$ is more preferably greater than or equal to 250 A. The pulse peak end current $I_{pend}$ is even more preferably greater than or equal to 270 A. When the pulse peak end current $I_{pend}$ exceeds 450 A, the occurrence of spatter and the number of adhering spatters during short-circuiting will increase due to high current and high arc pressure 10. Therefore, the pulse peak end current $I_{pend}$ is to be less than or equal to 450 A. The pulse peak end current $I_{pend}$ at the pulse peak end is preferably less than or equal to 420 A. $I_{pend}$ is more preferably less than or equal to 400 A. $I_{pend}$ is even more preferably less than or equal to 380 A.

Pulse peak time $T_p$: greater than or equal to 1.0 ms and less than or equal to 3.5 ms (preferred condition)

When the pulse peak time $T_p$ is less than 1.0 ms, the time for pushing the droplet 7 down to the molten pool 8 to achieve short-circuiting transfer will be too short, and periodic short-circuiting transfer will not be achieved. This may increase the occurrence of spatter and the number of adhering spatters. Therefore, the pulse peak time $T_p$ is preferably greater than or equal to 1.0 ms. The pulse peak time $T_p$ is more preferably greater than or equal to 1.2 ms. The pulse peak time $T_p$ is even more preferably greater than or equal to 1.5 ms. The pulse peak time $T_p$ is most preferably greater than or equal to 1.6 ms. When the pulse peak time $T_p$ exceeds 3.5 ms, the time for pushing the droplet 7 down to the molten pool 8 to achieve short-circuiting transfer is too long, and short-circuiting is not achieved at the intended timing. This increases the occurrence of spatter and the number of adhering spatters during short-circuiting. Therefore, the pulse peak time $T_p$ is preferably less than or equal to 3.5 ms. The pulse peak time $T_p$ is more preferably less than or equal to 3.2 ms. The pulse peak time $T_p$ is even more preferably less than or equal to 3.0 ms. The pulse peak time $T_p$ is most preferably less than or equal to 2.8 ms.

Peak start current $I_{pstart}$, pulse peak end current $I_{pend}$, and pulse peak time $T_P$ satisfying the following inequality (2) (preferred condition)

$$45 \leq (I_{pstart} - I_{pend})/T_p \leq 210 \quad \cdots \quad (2)$$

In inequality (2), $I_{pstart}$ (A) is pulse peak start current, $I_{pend}$ (A) is pulse peak end current, and $T_p$ (ms) is pulse peak time. When $(I_{PSTART} - I_{pend})/T_p$ is less than 45 A/ms or exceeds 210 A/ms, it will be difficult to achieve both the stable growth of the droplet 7 and the pushing action of the droplet 7 on the molten pool 8 during short-circuiting that are required for short-circuiting transfer control. This may increase the occurrence of spatter and the number of adhering spatters. Therefore, $(I_{pstart} - I_{pend})/T_p$ is preferably greater than or equal to 45 A/ms. $(I_{pstart} - I_{pend})/T_p$ is more preferably greater than or equal to 60 A/ms. $(I_{pstart} - I_{pend})/T_p$ is even more preferably greater than or equal to 100 A/ms. $(I_{pstart} - I_{pend})/T_p$ is most preferably greater than or equal to 120 A. As for the upper limit, $(I_{pstart} - I_{pend})/T_p$ is preferably less than or equal to 210 A/ms. $(I_{pstart} - I_{pend})/T_p$ is more preferably less than or equal to 190 A/ms. $(I_{pstart} - I_{pend})/T_p$ is even more preferably less than or equal to 180 A/ms. $(I_{pstart} - I_{pend})/T_p$ is most preferably less than or equal to 170 A/ms.

The base current $I_B$ described above is not particularly limited, but is preferably greater than or equal to 30 A. This is because when the base current $I_B$ is too small, arc discharge during the base period will be unstable, and this may deteriorate the bead shape and cause insufficient penetration. The base current $I_B$ is more preferably greater than or equal to 45A. Since excessive base current $I_B$ may cause burn-through, the base current $I_B$ is preferably less than or equal to 120 A, and more preferably less than or equal to 110 A.

Using gas containing greater than or equal to 98 vol% Ar as shielding gas

When the Ar gas ratio in the shielding gas is less than 98 vol%, chemical reactions between oxidizing gases in the shielding gas and alloy elements contained in the molten metal are promoted. This increases slag formation that leads to reduced corrosion resistance. Therefore, the Ar gas ratio in the shielding gas is to be greater than or equal to 98 vol%. The Ar gas ratio in the shielding gas is preferably greater than or equal to 99 vol%. The upper limit is not particularly defined and the Ar gas ratio may be 100%.

The present invention can provide advantageous effects thereof regardless of the shape of the joint produced by welding, such as bead-on-plate welding, butt welding, or fillet welding and the welding position, such as a downhand welding position or a horizontal welding position.

The average frequency (short-circuiting frequency) F (Hz) of short-circuiting transfer determines the volume of the droplet 7 at the wire end and is not particularly limited, but is preferably in the 20 Hz to 200 Hz range. That is, the average frequency (short-circuiting frequency) F (Hz) of short-circuiting transfer is preferably greater than or equal to 20 Hz, more preferably greater than or equal to 30 Hz, and even more preferably greater than or equal to 40 Hz. When the average frequency (short-circuiting frequency) F (Hz) of short-circuiting transfer is excessively high, the molten pool 8 is disturbed by reignition of the arc 5B accompanying the short-circuiting and this leads to instability in the shape of the weld bead. Therefore, the average frequency (short-circuiting frequency) F (Hz) of short-circuiting transfer is preferably less than or equal to 200 Hz, more preferably less than or equal to 180 Hz, even more preferably less than or equal to 170 Hz, and most preferably less than or equal to 150 Hz. The average frequency (short-circuiting frequency) F (Hz) of short-circuiting transfer can be measured, for example, by monitoring the transition of the arc voltage during welding with an oscilloscope, counting the number of times the arc voltage becomes zero, and dividing the resulting count value by the monitoring time to determine the number of times the arc voltage becomes zero per second (s). The monitoring time is preferably greater than or equal to 0.5 s, because when it is too short, the variation in count values described above increases. The monitoring time is more preferably greater than or equal to 0.8 s, and even more preferably greater than or equal to 1.0 s. Although the upper limit is not particularly defined, the monitoring time is preferably less than or equal to 3.0 s. This is because, for example, as the volume of measurement data increases, the time required for the counting process increases and workability decreases. The monitoring time is more preferably less than or equal to 2.8 s, and even more preferably less than or equal to 2.5 s.

The welding wire 1 used in the present invention is not particularly limited. For example, a solid wire for MAG welding as specified in JIS Z 3312 can be used.

The base material 3 according to the present invention is applicable to steel sheets and coated steel sheets. The chemical composition of the steel sheet is not limited, but a steel sheet containing, for example, C: 0.02 to 0.3 mass%, Si: greater than or equal to 0.01 mass%, Mn: greater than or equal to 0.5% mass%, P: less than or equal to 0.05 mass%, and S: less than or equal to 0.05 mass% is preferable. The steel sheet may further contain alloy elements, such as Cu, Ni, Cr, and Ti. The Si content in the steel sheet is preferably less than or equal to 3.0 mass%, and the Mn content in the steel sheet is preferably less than or equal to 5.0 mass%. The lower limit of P is not particularly defined, but is preferably greater than or equal to 0.0005 mass%. The lower limit of S is not particularly defined, but is preferably greater than or equal to 0.0005 mass%. Although the composition of the coating of a coated steel sheet is not particularly limited, the coating may contain, for example, Zn.

Examples

Hereinafter, Examples of the present invention will be described. Arc welding was performed on steel sheets (2.6 mm thick) having the composition shown in Table 1, for example, by the method illustrated in Fig. 1. The steel sheets contain Fe and alloy elements, such as, Cu, Ni, Cr, and Ti, other than the components shown in Table 1. Welding was performed under the welding conditions shown in Table 2. The welding wire 1 used in the present invention is not particularly limited. For example, a solid wire for MAG welding as specified in JIS Z 3312 can be used.

The welded steel sheets obtained as described above were evaluated for the number of adhering spatters, the slag coverage area ratio, and corrosion resistance of the weld in accordance with the following test method.

(Number of Adhering Spatters)

Fig. 4 is a schematic diagram illustrating a range for measuring the number of adhering spatters. The number of adhering spatters was measured by photographing the surface of the region excluding the weld-bead start and end portions 20 (each 15 mm long) and analyzing the photographs obtained. When the length of the weld bead 6 was less than 130 mm, the surface of the entire region excluding the weld-bead start and end portions 20 was photographed. When the length of the weld bead 6 was greater than or equal to 130 mm, the surface of any part (100 mm long) of the region excluding the weld-bead start and end portions 20 was photographed. The area to be measured is the weld spatter affected zone 21. Specifically, the weld spatter affected zone 21 is an area whose length in the weld line direction 23 is the length of the weld bead 6 excluding the weld-bead start and end portions 20 each 15 mm long and whose length in the direction perpendicular to the weld line is 40 mm centered on the center line of the weld bead 6. The number of spatters 22 adhering to the area described above and each having an adhesion region with a maximum length of greater than or equal to 0.2 mm was counted. The number of adhering spatters was considered acceptable when it was less than or equal to 0.50 spatters/cm$^2$.

(Slag Coverage Area Ratio)

Fig. 5 is a schematic diagram illustrating a bead area and a slag coverage area in a weld bead. The bead surface area $S_{BEAD}$ and the slag coverage surface area $S_{SLAG}$, such as those illustrated in Fig. 5, are calculated by photographing the surface of the region of the weld bead 6 excluding the weld-bead start and end portions 20 (each 15 mm long) from directly above, and measuring the projected area of the weld bead 6 and slag from the upper surface. When the length of the weld bead 6 is less than 130 mm, the surface of the entire region excluding the weld-bead start and end portions 20 is photographed. When the length of the weld bead 6 is greater than or equal to 130 mm, the surface of any part (100 mm long) of the region excluding the weld-bead start and end portions 20 is photographed. The slag coverage area ratio $S_{RATIO}$ was determined by dividing the value of the calculated slag surface area $S_{SLAG}$ by the value of the bead surface area $S_{BEAD}$. $S_{RATIO}$ was considered acceptable when it was less than or equal to 15%.

(Evaluation of Corrosion Resistance of Weld)

After a corrosion test, arc welded joints were immersed in an immersion-type remover to remove the electrodeposition coating, and corrosion products were removed in accordance with ISO 8407. Then, when the weld-bead start and end portions 20 (each 15 mm long) of the weld bead 6 were included, the surface of the region excluding the weld-bead start and end portions 20 was photographed, and the resulting photographs were analyzed to measure a maximum corrosion width $H_{MAX}$ from a weld bead toe in a direction perpendicular to the weld line. When the length of the weld bead 6 was less than 130 mm, the surface of the entire region excluding the weld-bead start and end portions 20 was photographed. When the length of the weld bead 6 was greater than or equal to 130 mm, the surface of any part (100 mm long) of the region excluding the weld-bead start and end portions 20 was photographed. The corrosion resistance was rated as good and marked with "○" when the maximum corrosion width $H_{MAX}$ was less than 6.0 mm, rated as excellent and marked with "◎" when the maximum corrosion width $H_{MAX}$ was less than 4.5 mm, and rated as poor and marked with "×" when the maximum corrosion width $H_{MAX}$ was greater than or equal to 6.0 mm. That is, the corrosion resistance was rated as "◎" in the case of a maximum corrosion width $H_{MAX}$ of less than 4.5 mm, rated as "o" in the case of a maximum corrosion width $H_{MAX}$ of greater than or equal to 4.5 mm and less than 6.0 mm, and rated as "×" in the case of a maximum corrosion width $H_{MAX}$ of greater than or equal to 6.0 mm. The ratings "o" and "◎" were considered as meeting the target, whereas the rating "×" was considered as not meeting the target.

As can be seen in Table 2, under welding Nos. 1 to 7 and Nos. 15 to 21 shown as Inventive Examples, welded joints with high corrosion resistance were obtained, as $S_{RATIO}$ was less than or equal to 15% and the number of adhering spatters was less than or equal to 0.50 spatters/cm$^2$.

Under welding Nos. 1 to 5, 16, 19, and 20 of Inventive Examples described above, welded joint shapes with higher corrosion resistance were obtained, as $S_{RATIO}$ was less than or equal to 15% and the number of adhering spatters was less than or equal to 0.45 spatters/cm$^2$.

In contrast, under welding Nos. 8 to 14 and 22 shown as Comparative Examples, welded joints with good corrosion resistance were not obtained, as $S_{RATIO}$ was greater than 15% or the number of adhering spatters was greater than 0.50 spatters/cm$^2$.

In Table 2, rating A was given when "$S_{RATIO}$ was less than or equal to 15%, the number of adhering spatters was less than or equal to 0.45 spatters/cm$^2$, and corrosion resistance was ◎", rating B was given when "$S_{RATIO}$ was less than or equal to 15%, the number of adhering spatters was greater than 0.45 spatters/cm$^2$ and less than or equal to 0.50 spatters/cm$^2$, and corrosion resistance was o", and rating F was given when "$S_{RATIO}$ was greater than 15%, the number of adhering spatters was greater than 0.50 spatters/cm$^2$, or corrosion resistance was ×". Rating F was considered a fail, and ratings A and B were considered a pass.

[Table 1]

| Composition of Steel Sheet (mass%) | | | | |
|---|---|---|---|---|
| C | Si | Mn | P | S |
| 0.060 | 0.71 | 1.80 | 0.0060 | 0.0010 |

[Table 2]

| Welding Conditions No. | Parameters | | | | | | | | | | Evaluation Result | | | Rating | Remarks |
|---|---|---|---|---|---|---|---|---|---|---|---|---|---|---|---|
| | Shielding Gas | Wire | Wire Diameter (mm) | Average Welding Current (A) | Arc Voltage (V) | Pulse Peak Start Current (A) | Pulse Peak End Current (A) | Base Current (A) | Pulse Peak Time (ms) | Inequality (2) (A/ms) | $S_{RATIO}$ (%) | Spatter Adhesion (spatters/cm$^2$) | Corrosion Resistance | | |
| 1 | 100%Ar | JIS Z 3312 G 78 A 4 M N5CM3T | 1.2 | 211 | 24.4 | 550 | 300 | 50 | 2.0 | 125 | 1 | 0.32 | ◎ | A | Inventive Example |
| 2 | 100%Ar | JIS Z 3312 G 49 AP 3 M 16 | 1.0 | 208 | 26.1 | 600 | 450 | 80 | 2.5 | 60 | 3 | 0.39 | ◎ | A | Inventive Example |
| 3 | 100%Ar | JIS Z 3312 G 78 A 4 M N5CM3T | 1.2 | 218 | 22.5 | 550 | 350 | 50 | 2.5 | 80 | 1 | 0.34 | ◎ | A | Inventive Example |
| 4 | 100%Ar | JIS Z 3312 G 78 A 4 M N5CM3T | 0.9 | 224 | 24.3 | 450 | 300 | 30 | 3.0 | 50 | 1 | 0.41 | ◎ | A | Inventive Example |
| 5 | 100%Ar | JIS Z 3312 G59 JA 1 U M 3M1T | 1.2 | 220 | 23.8 | 550 | 250 | 50 | 1.5 | 200 | 4 | 0.40 | ◎ | A | Inventive Example |
| 6 | 100%Ar | JIS Z 3312 G59 JA 1 U M 3M1T | 1.4 | 221 | 24.7 | 450 | 300 | 50 | 3.5 | 43 | 7 | 0.47 | ○ | B | Inventive Example |
| 7 | 100%Ar | JIS Z 3312 G 78 A 4 M N5CM3T | 1.2 | 205 | 249 | 550 | 200 | 50 | 1.5 | 233 | 4 | 0.48 | ○ | B | Inventive Example |
| 8 | 100%Ar | JIS Z 3312 G 78 A 4 M N5CM3T | 1.2 | 243 | 25.6 | 550 | 500 | 50 | 2.0 | 25 | 9 | 0.56 | × | F | Comparative Example |
| 9 | 100%Ar | JIS Z 3312 G 78 A 4 M N5CM3T | 1.2 | 211 | 20.1 | - | - | - | - | - | 12 | 0.69 | × | F | Comparative Example |

| Welding Conditions No. | Parameters | | | | | | | | | | Evaluation Result | | | Rating | Remarks |
|---|---|---|---|---|---|---|---|---|---|---|---|---|---|---|---|
| | Shielding Gas | Wire | Wire Diameter (mm) | Average Welding Current (A) | Arc Voltage (V) | Pulse Peak Start Current (A) | Pulse Peak End Current (A) | Base Current (A) | Pulse Peak Time (ms) | Inequality (2) (A/ms) | $S_{RATIO}$ (%) | Spatter Adhesion (spatters/cm$^2$) | Corrosion Resistance | | |
| 10 | 95%Ar+ 5%CO2 | JIS Z3312 G 78 A 4 M N5CM3T | 1.2 | 187 | 19.5 | 450 | 300 | 50 | 1.5 | 100 | 18 | 0.32 | × | F | Comparative Example |
| 11 | 100%Ar | JIS Z3312 G 78 A 4 M N5CM3T | 1.2 | 97 | 15.2 | 350 | 250 | 30 | 1.5 | 67 | 10 | 0.53 | × | F | Comparative Example |
| 12 | 100%Ar | JIS Z3312 G 78 A 4 M N5CM3T | 1.2 | 324 | 278 | 550 | 350 | 100 | 1.5 | 133 | 7 | 0.51 | × | F | Comparative Example |
| 13 | 100%Ar | JIS Z3312 G 78 A 4 M N5CM3T | 1.2 | 179 | 245 | 250 | 200 | 50 | 1.5 | 33 | 3 | 0.55 | × | F | Comparative Example |
| 14 | 100%Ar | JIS Z3312 G 78 A 4 M N5CM3T | 1.2 | 271 | 26.6 | 650 | 400 | 50 | 1.0 | 250 | 6 | 0.53 | × | F | Comparative Example |
| 15 | 100%Ar | JIS Z 3312 G59 JA 1 U M 3M1T | 1.2 | 244 | 23.9 | 500 | 350 | 50 | 0.5 | 300 | 5 | 0.48 | ○ | B | Inventive Example |
| 16 | 98%Ar +2%C02 | JIS Z3312 G 78 A 4 M N5CM3T | 1.2 | 206 | 22.3 | 500 | 350 | 50 | 2.0 | 75 | 9 | 0.34 | ◎ | A | Inventive Example |
| 17 | 98%Ar+ 2%C02 | JIS Z3312 G 78 A 4 M N5CM3T | 1.2 | 184 | 21.2 | 450 | 350 | 50 | 2.5 | 40 | 13 | 0.47 | ○ | B | Inventive Example |
| 18 | 100%Ar | JIS Z3312 G 78 A 4 M N5CM3T | 1.0 | 115 | 20.2 | 500 | 400 | 50 | 2.5 | 40 | 3 | 0.46 | ○ | B | Inventive Example |

12

(continued)

| Welding Conditions No. | Parameters | | | | | | | | | | Evaluation Result | | | Rating | Remarks |
|---|---|---|---|---|---|---|---|---|---|---|---|---|---|---|---|
| | Shielding Gas | Wire | Wire Diameter (mm) | Average Welding Current (A) | Arc Voltage (V) | Pulse Peak Start Current (A) | Pulse Peak End Current (A) | Base Current (A) | Pulse Peak Time (ms) | Inequality (2) (A/ms) | $S_{RATIO}$ (%) | Spatter Adhesion (spatters/cm$^2$) | Corrosion Resistance | | |
| 19 | 100%Ar | JIS Z 3312 G 78 A 4 M N5CM3T | 1.2 | 312 | 23.4 | 550 | 350 | 80 | 2.5 | 80 | 4 | 0.31 | ◎ | A | Inventive Example |
| 20 | 100%Ar | JIS Z 3312 G 78 A 4 M N5CM3T | 1.2 | 235 | 25.0 | 350 | 200 | 50 | 1.5 | 100 | 4 | 0.35 | ◎ | A | Inventive Example |
| 21 | 100%Ar | JIS Z 3312 G 78 A 4 M N5CM3T | 1.2 | 224 | 23.3 | 400 | 250 | 50 | 4.0 | 38 | 5 | 0.49 | ○ | B | Inventive Example |
| 22 | 100%Ar | JIS Z 3312 G 78 A 4 M N5CM3T | 1.2 | 235 | 25.7 | 450 | 450 | 50 | 2.0 | 0 | 2 | 0.62 | × | F | Comparative Example |

Reference Signs List

1 welding wire
2 welding torch
3 base material
5B arc
6 weld bead
7 droplet
8 molten pool
10 arc pressure
20 weld-bead start and end portions
21 weld spatter affected zone
22 spatter
23 weld line direction
$T_P$ pulse peak current time
$I_{PSTART}$ pulse peak start current
$I_{PEND}$ pulse peak end current
$I_B$ base current
$S_{BEAD}$ bead surface area
$S_{SLAG}$ slag coverage surface area

## Claims

1. An arc welded joint manufactured by lap fillet arc welding of joining a corner formed by two steel sheets, the arc welded joint comprising:

    an upper sheet;
    a lower sheet; and
    a weld joining the upper sheet and the lower sheet and penetrating into the upper sheet and the lower sheet,
    wherein an upper sheet thickness $t_1$ and a lower sheet thickness $t_2$ are both less than or equal to 5.0 mm;
    the lower sheet thickness $t_2$ and a penetration depth d satisfy the following inequality (1), the penetration depth d being a distance from a boundary between the upper sheet and the lower sheet to a lower surface of a weld bead in a cross-section of the weld:

$$0.20 \leq d/t_2 \leq 0.80 \quad \cdots \quad (1),$$

    where, in inequality (1), $t_2$ (mm) is lower sheet thickness and d (mm) is penetration depth; and
    a slag coverage area ratio $S_{RATIO}$ calculated by the following equation (2) using a bead surface area $S_{BEAD}$ of a weld bead surface and a slag surface area $S_{SLAG}$ is less than or equal to 15%, the slag surface area $S_{SLAG}$ being an area of a region of the bead surface area $S_{BEAD}$ covered with slag:

$$S_{RATIO} = S_{SLAG}/S_{BEAD} \times 100 \quad \cdots \quad (2),$$

    where, in equation (2), $S_{BEAD}$ (mm$^2$) is bead surface area, $S_{SLAG}$ (mm$^2$) is slag surface area being the area of the region covered with slag, and $S_{RATIO}$ (%) is slag coverage area ratio.

2. An arc welded joint manufacturing method for manufacturing an arc welded joint according to Claim 1, the method comprising:

    performing pulsed welding that periodically repeats a pulse peak current and a pulse base current as arc welding,
    wherein an average welding current $I_{AVE}$ is greater than or equal to 100 A and less than or equal to 320 A;
    a pulse peak current $I_p$ is greater than or equal to 400 A and less than or equal to 600 A;
    a pulse peak time $T_p$ is greater than or equal to 1.5 ms and less than or equal to 3.5 ms;
    a gas containing greater than or equal to 98 vol% Ar is used as a shielding gas during welding; and

a droplet transfer is achieved by short-circuiting a welding wire and a base material.

3. The arc welded joint manufacturing method according to Claim 2, wherein in the pulsed welding, the pulse peak current $I_p$, a pulse base current $I_b$, the pulse peak time $T_p$, a rise time $T_{up}$ from pulse base current to pulse peak current, a fall time $T_{down}$ from pulse peak current to pulse base current, an arc voltage V, and a welding speed W satisfy the following inequality (3):

$$5.8 \leq (Ip \times (T_p+T_{up}+T_{down}) - (I_p-I_b) \times (T_{up}+T_{down})/2)/(T_p+T_{up}+T_{down}) \times V/W/1000 \leq 14.4 \qquad (3),$$

where $I_p$ (A) is pulse peak current, $I_b$ (A) is pulse base current, $T_p$ (ms) is pulse peak time, $T_{up}$ (ms) is rise time, $T_{down}$ (ms) is fall time, V (V) is arc voltage, and W (cm/s) is welding speed.

# FIG. 1

# FIG. 2

(a)

(b)

# FIG. 3

(a)

(b)

# FIG. 4

# FIG. 5

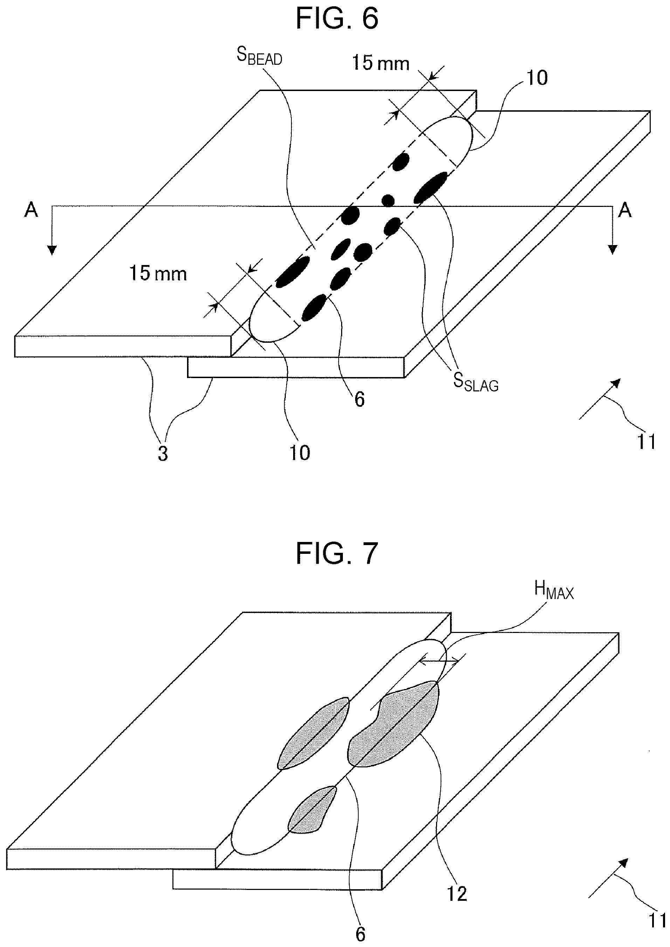

# FIG. 6

# FIG. 7

## INTERNATIONAL SEARCH REPORT

| International application No. |
|---|
| **PCT/JP2024/001190** |

**A. CLASSIFICATION OF SUBJECT MATTER**

***B23K 9/09***(2006.01)i; ***B23K 9/02***(2006.01)i; ***B23K 9/073***(2006.01)i
FI:   B23K9/09; B23K9/073 545; B23K9/02 D

According to International Patent Classification (IPC) or to both national classification and IPC

**B. FIELDS SEARCHED**

Minimum documentation searched (classification system followed by classification symbols)

B23K9/09; B23K9/02; B23K9/073

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/210335 A1 (JFE STEEL CORPORATION) 21 October 2021 (2021-10-21) paragraphs [0033]- [0077] | 1-2 |
| A | | 3 |
| A | JP 2017-164798 A (JFE STEEL CORPORATION) 21 September 2017 (2017-09-21) entire text, all drawings | 1-3 |

☐ Further documents are listed in the continuation of Box C.    ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **13 February 2024** | **27 February 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

INTERNATIONAL SEARCH REPORT
Information on patent family members

International application No.

**PCT/JP2024/001190**

| Patent document cited in search report | Publication date (day/month/year) | Patent family member(s) | Publication date (day/month/year) |
|---|---|---|---|
| WO 2021/210335 A1 | 21 October 2021 | US 2023/0132518 A1 paragraphs [0050]- [0101] EP 4137260 A1 KR 10-2022-0148285 A CN 115427179 A | |
| JP 2017-164798 A | 21 September 2017 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9020994 A
- JP 8033997 A

- JP 5549615 B